# EUROPÄISCHE PATENTSCHRIFT

(11) **EP 0 476 098 B1**
(45) Veröffentlichungstag und Bekanntmachung des Hinweises auf die Patenterteilung: **29.06.1994**
(21) Anmeldenummer: 91906880.9
(22) Anmeldetag: 26.03.1991
(51) Int. Cl.: B29C 43/14, B29C 43/20, B29C 43/18, B65D 35/10, B65D 35/12

(54) **VERFAHREN ZUR HERSTELLUNG EINER TUBE MIT EINEM MEHRSCHICHTIGEN TUBENKOPF UND TUBE AUS EINEM MINDESTENS EINE KUNSTSTOFFSCHICHT AUFWEISENDEN ROHRKÖRPER UND EINEM MEHRSCHICHTIGEN TUBENKOPF**
PROCESS FOR MANUFACTURING A TUBE WITH A MULTILAYER TUBE HEAD AND TUBE CONSISTING OF A PIPE BODY MADE OF AT LEAST ONE LAYER OF PLASTIC AND A MULTILAYER TUBE HEAD
PROCEDE DE PRODUCTION DE TUBES AYANT UNE TETE A COUCHES MULTIPLES ET TUBES COMPOSES D'AU MOINS UN CORPS TUBULAIRE AYANT AU MOINS UNE COUCHE EN MATIERE PLASTIQUE ET UNE TETE A COUCHES MULTIPLES

(30) Priorität: 26.03.1990 DE 4009656
(43) Veröffentlichungstag der Anmeldung: 25.03.1992
(73) Patentinhaber: AISA AUTOMATION INDUSTRIELLE SA, CH-1896 Vouvry (CH)
(72) Erfinder: KELLER, Gerhard, CH-1805 Jongny (CH)
(74) Vertreter: Patentanwälte Zellentin & Partner
(86) Internationale Anmeldenummer: EP9100580
(87) Internationale Veröffentlichungsnummer: WO9115350

(56) Entgegenhaltungen:
- EP-A- 59 281
- FR-A- 2 322 058
- GB-A- 2 191 167
- US-A- 3 465 917
- US-A- 4 338 278
- PATENT ABSTRACTS OF JAPAN Vol. 44, No. 88 (M-17) (570) 24 June 1980 & JP-A-55 46 949 (TOPPAN INSATSU K.K.) 2 April 1980

## Beschreibung

Die Erfindung betrifft ein Verfahren zur Herstellung einer Tube und eine Tube aus einem mindestens eine Kunststoffschicht aufweisenden Rohrkörper und einem durch Verpressen von erwärmten Kunststoffrohlingen geformten mehrschichtigen Tubenkopf mit einem zentralen in einer Ausgabeöffnung mündenden Tubenhals und mit einem Außengewinde zum Aufschrauben einer Verschlußkappe.

Ein derartiges Verfahren und eine derartige Tube ist aus der EP-A-59281 bekannt. Die Tube wird dadurch hergestellt, daß aus zwei übereinander angeordneten Düsenöffnungen zwei Kunststoffrohlinge übereinander ausgegeben und gemeinsam einer Preßform zugeführt werden. Die Preßform besteht aus einem Dorn, dessen freies Ende die Innenform des Tubenkopfes wiedergibt, auf den ein vorgefertigter Rohrkörper aufgeschoben ist, und einer Matrize, die die Außenform des Tubenkopfes wiedergibt. Durch Anlegen eines Preßdrucks werden die Rohlinge zu einem geschichteten Tubenkopf verpreßt, der gleichzeitig mit dem Rohrkörper verbunden wird. Hierdurch lassen sich zwar zwei Schichten erhalten, die jedoch keine gleichmäßige Anordnung aufweisen, da schon bei geringsten Abweichungen in der Viskosität oder der Temperatur der Rohlinge unterschiedliche Fließgeschwindigkeiten auftreten, die eine unterschiedliche Verteilung der beiden Rohlinge in der Preßform bewirken. Hierdurch lassen sich auch nur Tuben mit zwei Schichten im Tubenkopf erzeugen. Es besteht jedoch auch der Bedarf, z.B. eine Tube mit drei Schichten herzustellen, wovon eine eine Sperrschicht sein soll. Kunststoffe mit sperrender Wirkung sind meist schwer mit anderen Kunststoffen verbindbar und/oder dürfen nicht mit dem Tubeninhalt in Berührung kommen, so daß zusätzliche abdeckende Schichten als abdeckende und/oder isolierende Schichten erforderlich sind.

Aufgabe der Erfindung ist es, ein Verfahren der eingangs genannten Art anzugeben, das auf einfache Art und Weise mehrschichtige Tubenköpfe insbesondere auch mehr als zweischichtige mit definierter Gestalt der einzelnen Schichten herzustellen erlaubt.

Aufgabe der Erfindung ist es auch, eine Tube der eingangs genannten Art anzugeben, deren Tubenkopf Schichten mit einer gewünschten reproduzierbaren Form aufweist, wobei jeder Tubenkopf auch aus mehr als zwei Schichten und aus jeweils unterschiedlichem Material, auch aus einem sperrenden Barrierematerial, bestehen kann.

Diese Aufgabe wird durch ein Verfahren mit den Merkmalen des Anspruchs 1 und durch eine Tube mit den Merkmalen des Anspruchs 2 gelöst.

Vorteilhafte Ausgestaltungen der Tube sind in den Ansprüchen 3 bis 12 dargelegt.

Nachstehend wird die Erfindung anhand eines Ausführungsbeispiels einer Tube unter Bezug auf eine Zeichnung, die einen Querschnitt durch einen halben Tubenkopf mit angrenzendem Rohrkörper zeigt, beschrieben.

Die Tube weist einen Rohrkpörper 1 auf, der im Ausführungsbeispiel aus zwei miteinander verbundenen Kunststoffschichten, beispielsweise aus einem Polyethylen besteht. Der Rohrkörper 1 kann z.B. aus zwei ineinander extrudierten Schläuchen bestehen. Er kann auch aus einem Folienmaterial, das entlang der Längskanten miteinander verschweißt ist, hergestellt sein. Der Rohrkörper kann auch einen anderen Aufbau, z.B. nur eine Schicht oder mehr als zwei Schichten aufweisen, wovon auch eine Schicht eine Sperrschicht aus Kunststoff oder beispielsweise auch aus Aluminium sein kann.

Der Tubenkopf 2 ist im Ausführungsbeispiel dreischichtig und weist eine zur Innenseite der Tube gerichtete Innenschicht 3, deren Außenfläche den Innenraum 4 der Tube begrenzt, eine Außenschicht 5, deren Oberfläche die Außenform des Tubenkopfes 2 bestimmt sowie eine dazwischen angeordnete Mittelschicht 6 auf. Alle drei Schichten bilden gemeinsam einen konischen Basisteil 7 des Tubenkopfes 2 und einen zylindrischen Halsteil 8, in dessen Abdeckung 8′ eine zentral angeordnete Ausgabeöffnung 9 enthalten ist. Die Ausgabeöffnung 9 kann auch dem Innendurchmesser des Halsteils 8 entsprechen (nicht dargestellt).

Im Ausführungsbeispiel springt die Mittelschicht 6 in der Abdeckung 8' gegenüber der Innenschicht 3 geringfügig und gegenüber der Außenschicht 5 etwas stärker zurück, so daß in diesem Bereich die Innenschicht 3 direkt mit der Außenschicht 5 verbunden und die Mittelschicht 6 dort endseitig eingekapselt ist, so daß sie nicht mit einem Tubeninhalt in Berührung kommen kann.

Die Innenschicht 3 weist an ihrem an der Innenwand des Rohrkörpers 1 anliegendem Ende vorteilhafterweise einen verbreiterten Fuß 10 auf, der die Verbindungsfläche der Innenschicht 3 mit dem Rohrkörper 1 wesentlich vergrößert und damit eine bessere und haltbarere, auch hohen Drücken standhaltende, Verbindung gewährleistet. Im Ausführungsbeispiel ist die Mittelschicht 6 an ihrem gegenüber dem Rohrkörper 1 liegende Ende derart abgebogen, daß sie unter einem Winkel von 90° +-20° gegen die Innenrohrwandung gerichtet ist, und somit eine optimale Dichtung zum Rohrkörper 1 hin gewährleistet. Die Mittelschicht 6 kann am Außenrand, wie dargestellt, direkt und nahezu senkrecht abgewinkelt gegen die Innenwand des Rohrkörpers 1 stoßen. In anderen Fällen kann sie aber auch etwas zurückspringen und/oder nicht abgewinkelt sein (nicht dargestellt), so daß auch an diesem Ende die Außenschicht 5 direkt mit der Innenschicht 3 verbunden sein kann, wodurch auch hier eine Abkapselung der Mittelschicht 6 möglich ist. Die abgewinkelte Endlage der Mittelschicht 6 ermöglicht auch eine wesentliche Verbreiterung des Fußes 10, ohne daß dieser besonders tief in den Innenraum 4 der Tube vorspringen muß.

Etwa ab Höhe der Mittelschicht 6 ist der Rohrkörper 1 nach innen gewölbt, wobei seine Außenfläche stufenlos in die Oberfläche der Außenschicht 5 übergeht. Es besteht auch die Möglichkeit, die Tube so zu gestalten, daß die Außenschicht 5 das Ende des Rohrkörpers 1 überdeckt (nicht dargestellt) oder daß auf der konischen Außenfläche der Mittelschicht 6 ringförmige Vorsprünge oder ein sonstiges Relief aus dekorativen Gründen oder zur Versteifung vorhanden sind. Im Halsteil 8 ist in der Außenschicht 5 ein Schraubgewinde 11 für eine nicht dargestellte Schraubkappe eingeformt.

Die Schichten können aus unterschiedlichen insbesondere thermoplastischen Kunststoffmaterialien bestehen. Unter den bisher bekannten für die Tubenherstellung eingesetzten Kunststoffen gibt es Kunststoffe mit guten Barriereeigenschaften, die sich jedoch meist nur schwer mit anderen Kunststoffen verschmelzen lassen. Die Kunststoffe, die sich gut miteinander verbinden lassen, weisen jedoch meist schlechtere sperrende Barriereeigenschaften auf. Für das Ausführungsbeispiel bietet sich daher an, zwei sich leicht mit den Kunststoffschichten des Rohrkörpers 1 verbinden lassende Innnen- und Außenschichten 3 und 5 vorzusehen und dazwischen eine aus einem Barrierematerial bestehende Mittelschicht anzuordnen, die beid- oder einendig eingekapselt sein kann. Beispielsweise kann bei dreischichtigem Aufbau die Innenschicht aus einem Polyethylen, nämlich aus LDPE (Low Density Poly Ethylene = Polyethylen geringer Dichte) oder LLDPE (Linear Low Density Poly Ethylene = lineares Polyethylen geringer Dichte), die Mittelschicht als Barriereschicht aus einem Ethylen-Vinyl-Alkohol-Copolymer (EVOH/EVAL) und die Außenschicht aus einem Polyethylen, nämlich HDPE (High Density Poly Ethylene = Polyethylen hoher Dichte) oder MDPE (Medium Density Poly Ethylene = Polyethylen mittlerer Dichte) bestehen.

Wenn der vorgefertigte Rohrkörper aus Polypropylen besteht, können sowohl die Innen- als auch die Außenschicht ebenfalls aus Polypropylen bestehen. Bei einem zweischichtigen Aufbau kann beispielsweise die Außenschicht aus LDPE oder HDPE und die Innenschicht aus PETP (Polyethylenterephthalat) oder PBTP (Polybutylenterephthalat) oder einem anderen thermoplastischen Polyester bestehen.

Sofern die Haftung der einzelnen Schichten aneinander nicht besonders fest ist, können zur gegenseitigen Verbindung auch mechanische Verbindungen 12 zum Beispiel in der Art von Druckknopfverbindungen vorgesehen sein.

Um eine derartige Tube herzustellen wird in einem ersten Schritt der zylindrische Rohrkörper auf einen Dorn, diesen etwas überlappend, aufgeschoben, Das freie Ende des Dorns ist der Innenform des Tubenkopfes entsprechend gestaltet. Der Dorn mit dem Rohrkörper wird in eine Matrize gepreßt, in die vorher ein erwärmter Rohling eines Kunststoffes eingeführt ist. Die Matrize weist einen Ringspalt zur Aufnahme des vorkragenden Endes des zylindrischen Rohrkörpers, einen zentralen Lochstempel und eine Form auf, die der gewünschten Außenfläche der Innenschicht 3 entspricht. Gegebenenfalls können noch Vorsprünge zur Erzeugung von Vertiefungen für die mechanischen Verbindungen 11 vorgesehen sein. Nach dem Formgeben der Innenschicht 3 wird der Dorn mit dem Rohrkörper und der Innenschicht 3 des Tubenkopfes in eine zweite Matrize zugeführt, die einen entsprechenden Aufbau aufweist und zur Herstellung der Mittelschicht mit der jeweils gewünschten Form und Stärke dient.

Schließlich wird in einer dritten Matrize die Außenschicht 5 mit dem Gewinde 11 hergestellt. Zur Herstellung der Abdeckung 8′ im Bereich der Ausgabeöffnung 9 in der dargestellten Form weist der Lochstempel der ersten Matrize für die Herstellung der Innenschicht 3 einen Durchmesser auf, der größer ist als der für die Herstellung der Außenschicht 5 in der dritten Matrize, jedoch etwas kleiner als der für die Herstellung der Mittelschicht 6 in der zweiten Matrize, wobei dieser Lochstempel ein stumpfkegeliges Ende aufweist. Durch die Maßnahmen deckt das Material der Außenschicht auch das Innere des Halsteils ab, wodurch sowohl die Mittelschicht als auch die Innenschicht im Halsteil abgedeckt werden.

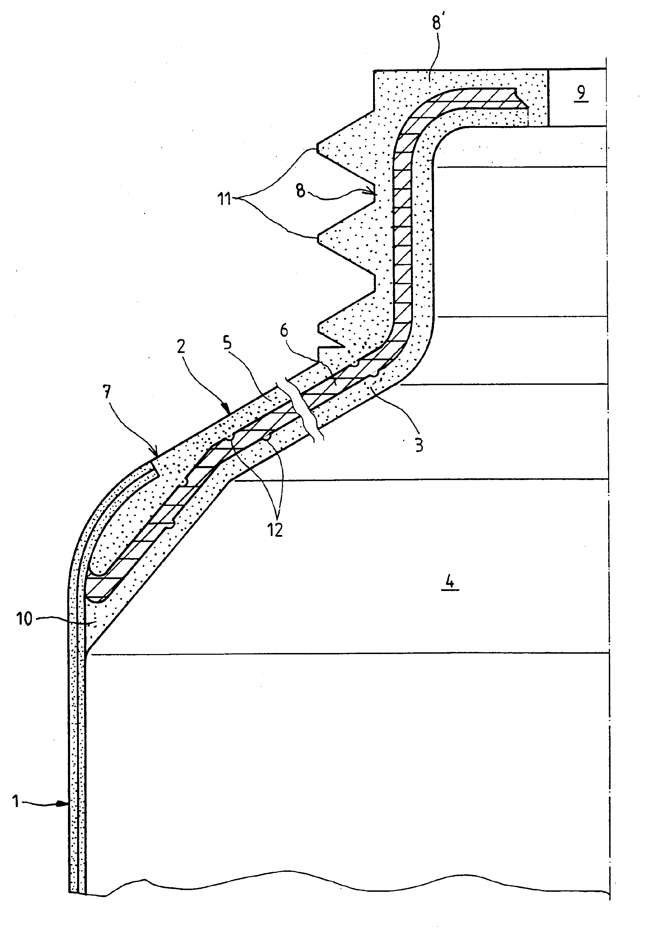

## Patentansprüche

1. Verfahren zur Herstellung von Tuben aus einem vorgefertigten Rohrkörper durch Verpressen von erwärmten Rohlingen aus Kunststoff zu einem mehrschichtigen Tubenkopf unter-gleichzeitiger Verbindung des Tubenkopfes mit dem Rohrkörper, **dadurch gekennzeichnet,** daß jede Schicht des mehrschichtigen Tubenkopfes einzeln durch Verpressen eines jeweils neu zugeführten Rohlings aus einem Kunststoff hergestellt wird, wobei der jeweils nächste Rohling für die nachfolgende Schicht erst dann zugeführt und verpreßt wird, wenn die jeweils vorher hergestellte Schicht formstabil ist.

2. Tube aus einem mindestens eine Kunststoffschicht aufweisenden Rohrkörper (1) und einem durch Verpressen von erwärmten Kunststoffrohlingen angeformten mehrschichtigen Tubenkopf (2) mit einem zentralen in einer Ausgabeöffnung (9) mündenden Halsteil (8) mit einem Außengewinde (11) zum Aufschrauben einer Verschlußkappe, **dadurch gekennzeichnet,** daß jede Schicht (3, 6, 5) des mehrschichtigen Tubenkopfes (2) einzeln Schicht auf Schicht in das obere Ende des Rohrkörpers (1) eingepreßt ist.

3. Tube nach Anspruch 2, **dadurch gekennzeichnet**, daß mindestens eine Schicht des mehrschichtigen Tubenkopfes (2) eine sperrende Barriereschicht ist.

4. Tube nach Anspruch 2 oder 3, **dadurch gekennzeichnet,** daß der Tubenkopf (2) aus einer Außenschicht (5), einer Innenschicht (3) und mindestens einer dazwischen liegenden Mittelschicht (6) besteht.

5. Tube nach Anspruch 4, **dadurch gekennzeichnet,** daß die Innenschicht (3) einen innen am Rohrkörper (1) anliegenden verbreiterten Fuß (10) aufweist.

6. Tube nach Anspruch 4 oder 5, **dadurch gekennzeichnet**, daß eine Mittelschicht (6) wenigstens mit ihrem äußeren dem Rohrkörper (1) zugewandten Rand unter einem Winkel von 90° +-20° gegen den Rohrkörper (1) gerichtet ist.

7. Tube nach einem der Ansprüche 4 bis 6, **dadurch** **gekennzeichnet,** daß wenigstens eine Mittelschicht (6) eine sperrende Barriereschicht ist.

8. Tube nach einem der Ansprüche 4 bis 7, **dadurch** **gekennzeichnet,** daß die Außenkante der Mittelschicht (6) mindestens an dem im Bereich der Ausgabeöffnung (9) liegenden Rand vom Material der benachbarten Schicht (5) abgedeckt ist.

9. Tube nach einem der Ansprüche 2 bis 8, **dadurch** **gekennzeichnet,** daß der Rohrkörper (1) im Bereich der Außenschicht (5) nach innen gewölbt ist.

10. Tube nach einem der Ansprüche 2 bis 9, **dadurch** **gekennzeichnet,** daß die Außenwandung des Rohrkörpers (1) stufenlos in die Außenfläche der Außenschicht (5) übergeht.

11. Tube nach einem der Ansprüche 1 bis 10, **dadurch** **gekennzeichnet,** daß die Schichten des mehrschichtigen Tubenkopfes (2) mittels mechanischer Verbindungen (12) miteinander verbunden sind.

## Claims

1. A method of producing tubes from a prefabricated tubular body by the pressure moulding of heated blanks from synthetic plastics material to produce a multi-layer tube head while at the same time connecting the tube head to the tubular body, characterised in that each layer of the multi-layer tube head is produced individually by the pressure moulding of a newly fed blank from a synthetic plastics material, whichever is the next blank for the subsequent layer being first supplied and then pressure moulded when the previously produced layer is stable in its form.

2. A tube consisting of a tubular body (1) having at least one layer of synthetic plastics material and a multi-layer tube head (2) integrally moulded by pressure moulding from heated synthetic plastics blanks and with, opening out into a delivery orifice (9), a central neck part (8) with an external screw thread (11) onto which it is possible to screw a closure cap, characterised in that each layer (3, 6, 5) of the multi-layer tube head (2) is impressed into the upper end of the tubular body (1) individually, layer by layer.

3. A tube according to Claim 2, characterised in that at least one layer of the multi-layer tube head (2) is barrier layer.

4. A tube according to Claim 2 or 3, characterised in that the tube head (2) consists of an outer layer (5), an inner layer (3) and at least one intermediate middle layer (6).

5. A tube according to Claim 4, characterised in that the inner layer (3) has a widened out foot (10) which rests on the inside of the tubular body (1).

6. A tube according to Claim 4 or 5, characterised in that a middle layer (6) has at least its outer edge which is towards the tubular body (1) directed towards the tubular body (1) at an angle of 90° +- 20°.

7. A tube according to one of Claims 4 to 6, characterised in that at least one middle layer (6) is a barrier layer.

8. A tube according to one of Claims 4 to 7, characterised in that the outer edge of the middle layer (6) is covered by the material of the adjacent layer (5) at least at the edge which is in the region of the delivery orifice (9).

9. A tube according to one of Claims 2 to 8, characterised in that the tubular body (1) is inwardly convex in the region of the outer layer (5)

10. A tube according to one of Claims 2 to 9, characterised in that the outer wall of the tubular body (1) merges steplessly into the outer surface of the outer layer (5).

11. A tube according to one of Claims 1 to 10, characterised in that the layers of the multi-layer tube head (2) are connected to one another by mechanical connections (12).

## Revendications

1. Procédé pour la fabrication de tubes à partir d'un corps tubulaire préfabriqué, par compression d'ébauches en matière plastique chauffées pour former une tête de tube multicouche, avec une liaison simultanée de la tête de tube avec le corps tubulaire, caractérisé en ce que chaque couche de la tête de tube multicouche est fabriquée individuellement par compression d'une ébauche en matière plastique amenée, l'ébauche suivante prévue pour la couche suivante n'étant amenée et comprimée que lorsque la couche fabriquée précédemment est indéformable.

2. Tube composé d'un corps tubulaire (1) comportant au moins une couche de matière plastique, et d'une tête de tube multicouche (2) qui est rapportée par compression d'ébauches de matière plastique chauffées et qui comporte un élément central formant col (8) débouchant dans une ouverture de sortie (9) et pourvu d'un filetage extérieur (11) en vue du vissage d'un couvercle de fermeture, caractérisé en ce que chaque couche (3, 6, 5) de la tête de tube multicouche (2) est pressée individuellement, couche par couche, dans l'extrémité supérieure du corps tubulaire (1).

3. Tube selon la revendication 2, caractérisé en ce qu'au moins une couche de la tête de tube multicouche (2) constitue une couche barrière d'arrêt.

4. Tube selon la revendication 2 ou 3, caractérisé en ce que la tête de tube (2) se compose d'une couche extérieure (5), d'une couche intérieure (3) et d'au moins une couche intermédiaire (6) prévue entre les deux.

5. Tube selon la revendication 4, caractérisé en ce que la couche intérieure (3) présente une base élargie (10) appliquée à l'intérieur contre le corps tubulaire (1).

6. Tube selon la revendication 4 ou 5, caractérisé en ce qu'une couche intermédiaire (6) est dirigée vers le corps tubulaire (1), au moins avec son bord extérieur tourné vers celui-ci, suivant un angle de 90° +- 20°.

7. Tube selon l'une des revendications 4 à 6, caractérisé en ce qu'au moins une couche intermédiaire (6) constitue une couche barrière d'arrêt.

8. Tube selon l'une des revendications 4 à 7, caractérisé en ce que le bord extérieur de la couche intermédiaire (6) est couvert, au moins au niveau du bord situé dans la zone de l'ouverture de sortie (9), par le matériau de la couche (5) voisine.

9. Tube selon l'une des revendications 2 à 8, caractérisé en ce que le corps tubulaire (1) est bombé vers l'intérieur dans la zone de la couche extérieure (5).

10. Tube selon l'une des revendications 2 à 9, caractérisé en ce que la paroi extérieure du corps tubulaire (1) se transforme progressivement en surface extérieure de la couche extérieure (5).

11. Tube selon l'une des revendications 1 à 10, caractérisé en ce que les couches de la tête de tube multicouche (2) sont reliées entre elles à l'aide de liaisons mécaniques (12).
